# EUROPEAN PATENT SPECIFICATION

(11) **EP 1 024 071 B1**
(45) Date of publication and mention of the grant of the patent: **09.09.2009**
(21) Application number: 99850214.0
(22) Date of filing: 27.12.1999
(51) Int. Cl.: B62B 3/06, B62D 51/00

(54) **Safety control for tiller trucks**
Sicherheitssteuereinrichtung für ein deichselgesteuertes Flurförderfahrzeug
Dispositif de commande de sécurité pour un chariot industriel guidé par un timon

(30) Priority: 30.12.1998 SE 9804594
(43) Date of publication of application: 02.08.2000
(73) Proprietor: Toyota Material Handling Europe AB, 583 30 Linköping (SE)
(72) Inventor: Stenberg, Kurt-Ove, 595 44 Mjölby (SE)
(74) Representative: Axell, Kristina

(56) References cited:
- EP-A- 0 398 393
- FR-A- 2 251 944
- FR-A- 2 630 979

## Description

At tiller trucks, in order to secure that the operator is not squeezed between the tiller and a wall, pallet shelves or other object a so called belly-button or safety control is arranged centrally on the handle and slightly protruding towards the operator. If the button is depressed the truck immediately begins to drive away from the operator. Normally this button is not used and it is impossible to be certain that the operator regularly test if the button works or not. In particular if the truck is used outdoors or alternatingly indoors and outdoors the contacts may in particular without regular use oxidize with resulting malfunction. It is of course possible to prescribe a repeated testing but it is not certain that this is always done.

A safety control system of the above type is shown in FR 2 630 979 disclosing a safety control system according to the preamble of claim 1. An electrical switch in belly-button initiates, when the belly-button is depressed, a reversing of the drive direction of the truck motor

In view of the above problem the object of the invention is to provide an increased security in the function of the belly-button of tiller trucks at the same time as the cost is reduced. In accordance with the invention this object is solved by a safety control system according to claim 1, i.e by arranging the safety button so that it influences switched or sensors separately or in combination that belong to other controls, and in particular such that are regularly used.

In a further development of the inventive thought the safety button and the speed control are arranged with one or several sensors or switches in common. The speed control can for instance include several switches (or sensors 18) that each correspond to a specific drive current (like a staircase). Activation of the speed control activate only a limited number of these switches at a time. When the safety button is activated (pushed in) an extra activation of one or several sensors take place. This sensor or sensors are, chosen in such a way that a logic unit connected to the sensors immediately detect that the safety button has been depressed and based hereon activate a preprogrammed safety procedure including for instance driving the truck away from the operator.

For instance the safety button may influence some of the switched or sensors that correspond to a driving away from the operator, for instance the one that corresponds to the second fastest speed away from the operator, that is in the direction of the forks.

In other words switches or sensors will be used for the safety button that are frequently used and therefore do not risk to be destroyed through oxidation. Mechanically the safety button is not worn at all since it is normally not used but remain mechanically as good as new.

In an advantageous version of the invention fixed mounted Hall-sensors are used for the speed control in combination with a moveable magnet that in a pivoting movement is brought past the sensors. The safety button is then provided with one or several magnets that on the depression of the button enter into the reaction area of one or several Hall sensors belonging to the speed control. Since no contacts exist a very safe function of the belly or safety button is achieved.

When the safety control is freed through the movement of the truck away from the operator the logic may if so is desired require that the speed control must return to zero position, possibly even for a certain time before driving toward the operator may take place again. During the waiting time the brake of the truck may be activated in order to prevent the truck from freewheeling towards the operator if the truck stands on an inclined surface.

Since the sensor elements that belong to the speed control are in constant use the logic can comparatively simply continuously monitor that they function since the sensors are passed in succession after one another in a repeated or reversed order at increase or decrease. The logic can thus monitor if this order is followed and if some sensor suddenly is passed without activation it is not functioning. At a first look it may seem that this monitoring easily will become unsatisfactorily if the sensor or the sensors that can be influenced by the safety button correspond to high speed deflections of the speed control and therefor not will be influenced at each movement. In reality however full speed is the most usual position of the control at driving and a check will therefor sufficiently often be carried out giving a satisfactory security. Should a malfunction be registered for precisely that or those sensors that are used also for the safety button preferably continued driving is prevented or this may only take place with essential limitations at least for movements towards the operator.

One can also consider to arrange two magnets so that activation takes place at two locations of different Hall elements which is recognized by the logic on the circuit card as an order to drive the truck away from the operator.

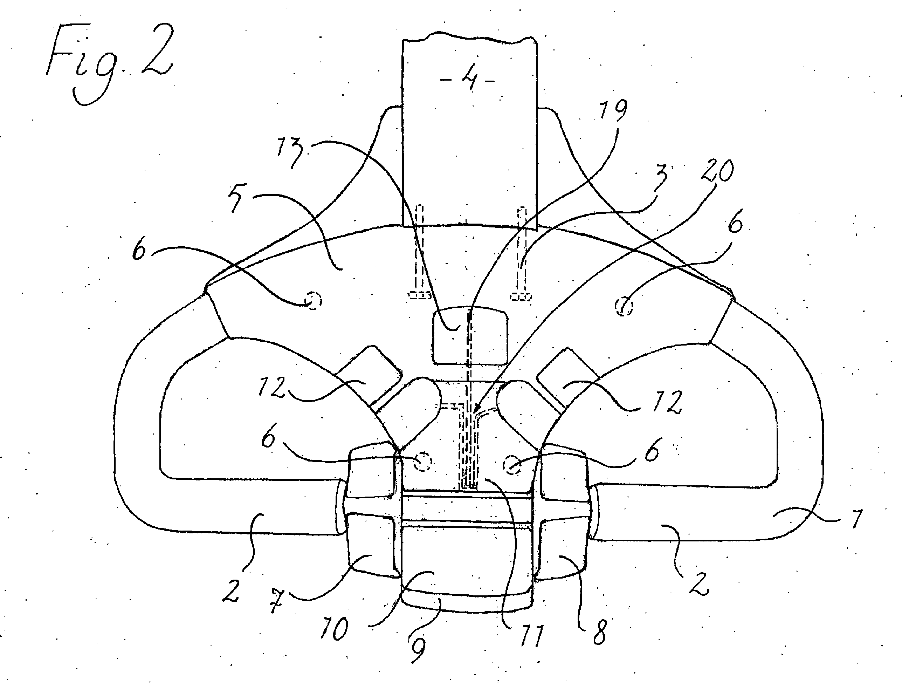

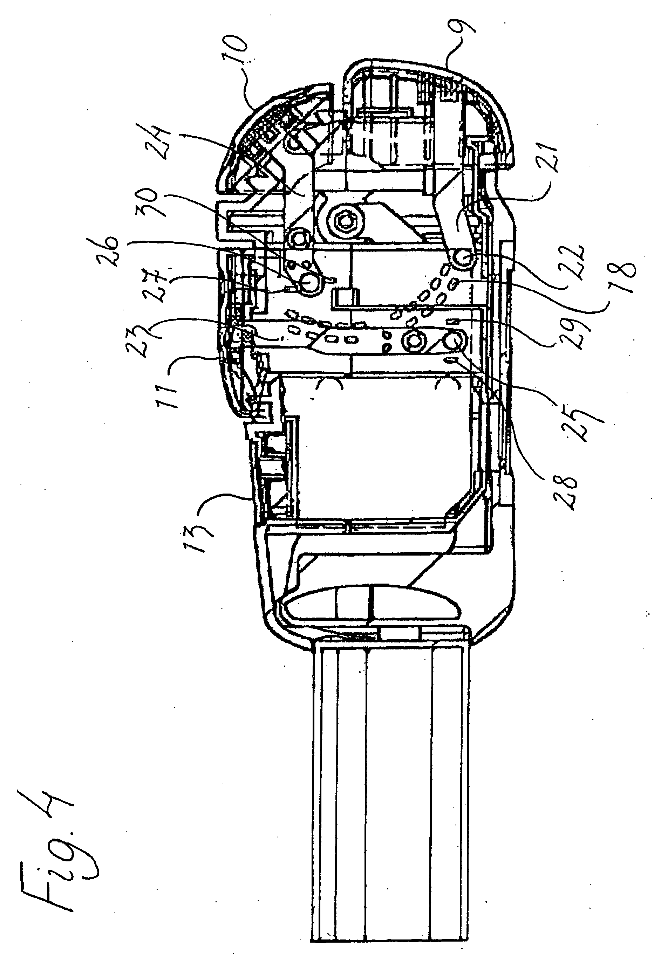

Additional advantages and characteristics of the invention are apparent from the following description of an embodiment shown in the enclosed drawings. In these fig. 1 shows a tiller truck in its entirety, fig 2 its handle seen from above, fig 3 and 4 vertical longitudinal sections through the handle and fig 5 one of the speed controls.

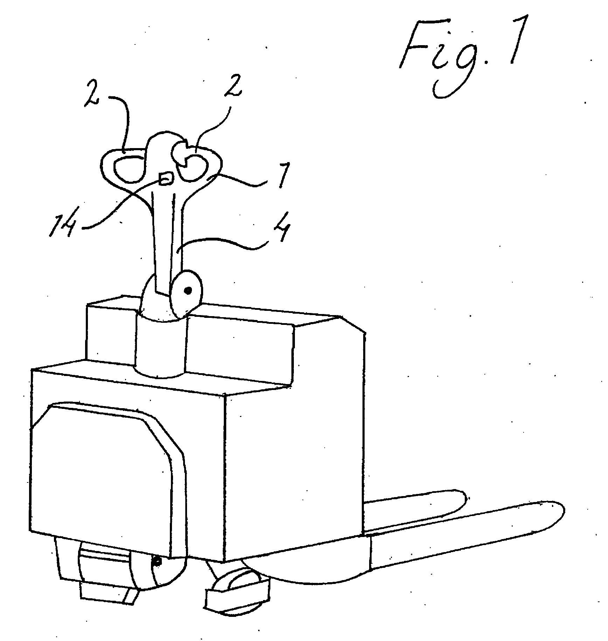

The tiller truck shown in fig 1 includes a drive and power unit from which the load forks project. In the drive and power unit the large batteries of the truck are arranged as well as a driving and steering wheel that is driven by a motor that is fed with electricity via a chopper that for instance provide currents in the shape of short pulses via tyristors. In the drive and power unit a hydraulic pump is provided with its electrically driven motor and hydraulic valves for the lifting movements. With the driving and steering wheel a tiller 4 is further connected, that is hinged height wise but pivotable together with the wheel in the drive and power unit for steering of the truck. In the outer end of the tiller a tiller handle is fastened and normally the operator leads the truck behind himself or steers it in front of himself.

The handle contains a supporting structure 1 provided with two grip handles 2 and is by means of bolts 3 fastened to the tiller 4 of the truck. On the frame 1 of the handle a control panel is fastened with four screws 6. The panel 5 is provided with drive controls 7 and 8 for left and right hand respectively for control of travel direction and speed by turning.

The control panel further includes a safety control or belly-button 9, a control 10 for lifting and lowering of the forks , a control 11 for lifting and lowering of the support legs and two buttons for the horn, one for the left and one for the right hand. On the top side the handle is further provided a display 13 and on the bottom side there is keyboard 14 for authority verification.

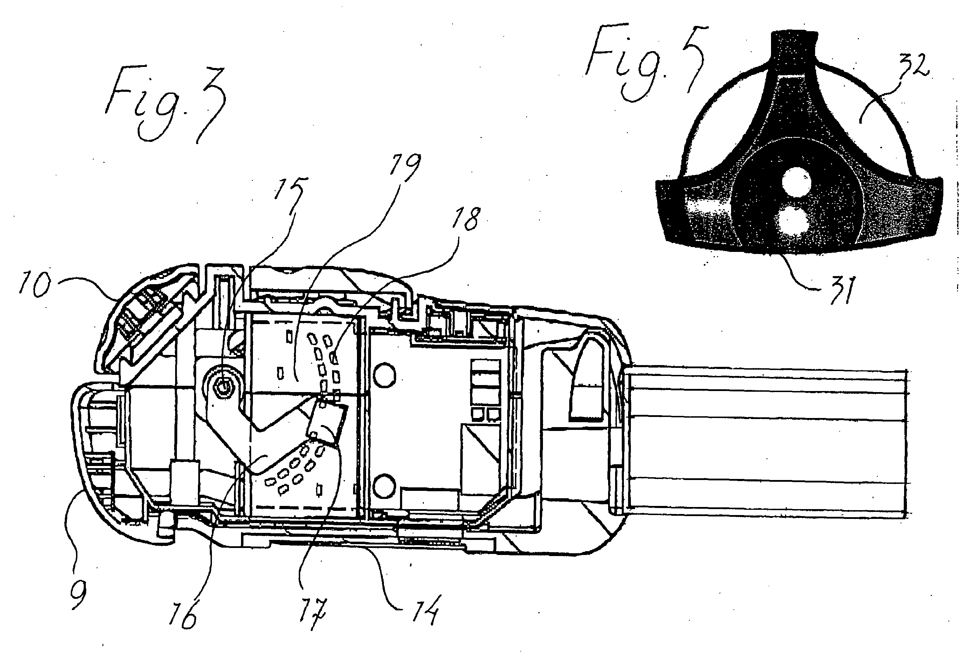

The drive controls 7 and 8 has the shape that is shown in fig 5 and differ from conventional drive controls by a downwards facing only slightly curved side 31. The operator can when he walks forwards with the truck following after him turn the palm of the hand upwards with the index finger in contact with the downwards facing only slightly curved side of the control, while the thumb may grip into the upper recess 32 turned towards the operator.In this way the ergonomics and the possibility of the operator to vary the manner in which the drive controls are actuated improve, so that the comfort is increased at the same time as the risk of wear damages is reduced.

The drive controls 8 and 7 for right and left hand respectively are connected to an axle 15 journaled in a lower bowl shaped part of the control panel 5. On the axle 15 an arm 16 is arranged provided with a magnet 17 in the outer end. At actuation of one of the drive controls 7 or 8 this magnet 17 is swung upwards or downwards from the neutral rest position dependent on desired direction of movement and speed respectively. The magnet that moves in a vertical plane at this sweeps along a curved double path of separate Hall sensors 18 arranged on a printed circuit 19. Via a serial cable the printed circuit card is in contact with the drive and power unit of the truck. The printed circuit card is in the proximity of the speed control arranged in a narrow vertical receiving space or slot 20 in the bottom part of the housing and is in this way well protected, while the magnet moves on the outside of the slit wall, the magnet or any of the other moveable parts can thus not harm the Hall sensors or the printed circuit card even at greater play. The magnet field however has no difficulty in reaching through the walls of the receptacle and influence the Hall-elements. The Hall elements 18 serve as sensors or switches and the further forward (towards the truck) arranged logic is programmed so that it via the serial cable and an electronically controlled chopper between battery and drive motor can control a successive increasing feed of more drive power at increased deflection of the drive control. The axle is further influenced by a spring device that when uninfluenced return the speed control to its 0-position. Since the Hall sensors 18 are arranged in double rows a large number of individual control levels are obtained (nine in each direction).

Through the used sensor technique the possibility is obtained to have many regulator steps at a low cost and it is easy to adapt the truck speed to the walking velocity of individual operators. In order to allow sufficient precision of the speed steps at low speed the steps are smaller at low speeds than those at the higher speeds. In order additionally to eliminate the feeling of jerkiness at the turning of the drive control the electronics is programmed to give a stepless increase, which is obtained by a successive and stepless increase to this value as the control is turned to the next step. By letting the rapidity in this successive and stepless increase be controlled by how swift the control movement is the sense of sluggishness that otherwise might be felt at increase is avoided. At a swift increase the ramping will be steep and no delay is felt and at a slow increase the ramping is slow so that the operator is not surprised by any sudden increase in velocity. This adaptive ramping may to its inclination be controlled by the time that passes between the activation of the different sensors at increase and decrease. Although this leads to a delay corresponding to the time between the reaction of these sensors this time is entirely negligible in relation to the slowness of the truck due to its weight.

As an alternative to the above use of Hall-elements for contact free control one can consider the use of photosensitive elements together with light guides or reflectors and light emitting diodes or some other light source.

The belly or security button has as its purpose to prevent the operator from being squeezed between the truck and a wall. Should this occur and the belly button is pushed in this is on an inwardly extending arm 21 provided with a magnet 22 that at this movement is moved so that it will influence one or several of the Hall elements that belong to the speed control, the magnet 22 however being located on the other side of the circuit card and its respective slot in relation to the magnet of the speed control. The magnet is as is apparent in level with the Hall-element that corresponds to the next fastest speed away from the operator, that is movement in the fork direction. The logic of the printed circuit card is at this programmed to activate an anti squeeze operation where the truck moves away from the operator until the button is released and has returned to its initial position.

The logic is further so programmed that if it detects a sensor fault that could mean that the sensor or sensors that are to react on a pushing of the belly-button might be non-functioning further use is blocked, or only allowed with limitations, as for instance that the truck can only be driven with a reduced speed and/or that the truck can not be driven towards the operator.

Also the controls located on top of the handle are provided with arms 23, 24 and magnets 25, 26 so that a tilting movement result in Hall-elements 27-30 being influenced initiating movements up and down for forks and support legs respectively.

For the above listed controls the use of Hall elements on the printed circuit card is particularly simple to arrange since the controls are located centrally in the handle in the same manner as the printed circuit card. If so desired one could consider also to arrange the signal controls with an extension and a magnet for a corresponding activation but in the shown case the signal controls are conventional electric contacts and connected by means of electric leads. Since the sensors belonging to the different movement controls are constituted by Hall elements sitting directly on the printed circuit card the possibility of electromagnetic pulses coming from the outside to interfere will become very small since the leads are short and centrally placed and also can be metal enclosed.

The slot or channel 20 receiving the printed circuit card 19 in the panel housing is narrow where the Hall sensors are situated to allow magnet influence for respective control but is widened in the end facing the truck. In this wider end the capsules containing the processors, memories etc are arranged, as well as the connections to the serial cable 31, keyboard and display.

The display 13 arranged on top of the control panel 5 is connected to the printed circuit card 19. The display is used at malfunction control and parameter setting without external means or additionally on the truck arranged means, but solely with the controls that the truck is normally provided with. In order to conduct an error control or parameter setting respectively one of the signal buttons is depressed at the same time as the truck is turned on via the authority verification described in more detail below alternatively with a key. This result in the logic of the truck entering into what we could call a check mode with all working functions inactive. An E is shown on the display corresponding to an Error log mode. A continued depressing result in the display of a P corresponding to parameter setting mode and a releasing of the signal button causes it to stay in the shown mode.

In the E-mode after a releasing of the signal button the latest error or malfunction that has been registered is displayed in the form of an error code alternating with the time (drive time) at which the error occurred. By means of the speed control one can then move back and forward in time with error codes and corresponding times being displayed. To get out of the error log mode the truck is turned off.

If by a somewhat longer depression of the signal button a P is shown on the display and the button is released at this the parameter setting mode has been entered and by actuation of the drive control corresponding to movement from or against the operator the display moves up or down in the list of parameters. When the parameter that is to be altered has been reached in this way the signal button is depressed resulting in the display of the parameter value, which can be altered up or down by means of the drive control. When the desired value has been reached this is confirmed by a depressing of the signal button, whereafter with the drive control the next parameter that is to be changed can be chosen. In order to exit the parameter setting mode the truck is turned off.

Examples of parameters etc that may be adjusted are allowed acceleration and retardation, height and load limitations, what one wants to receive warnings about, as battery voltage, load weight, height indication, if the indication is to be in kilograms, pounds, meters, feet etc.

The shift back from the error mode or parameter setting mode to drive mode is by turning the machine off. By not depressing any of the signal buttons at the starting the machine starts in drive mode with the possibly new parameter settings.

As is realized a possible change of the number of modes includes only changes in the electronics and a possible increase in the number of modes and check possibilities can thus be achieved with small costs, whether it is a question of further developments in production or refurnishing of a truck.

On the bottom side of the handle a keyboard is arranged for authority verification and starting and turning off of the truck instead of by means of a key. The keyboard is connected to the printed circuit card and arranged on the bottom of the housing of the control panel bottom part. The chassis of the handle is here provided with a corresponding recess so that the keys can be actuated. In this way the keyboard will at the same time be recessed and well protected by the sturdy chassis. The key board includes figure keys and a green key for start and a red key for stopping. If one wishes to enter Error log Mode, parameter setting mode or some other mode where the truck is inactivated one of the signal buttons is depressed at the same time as the green button is depressed or after entered authority verification code. The signal buttons are easy to reach even with the handle turned upward since they are located on the side of the control panel.

The keys of the keyboard may be provided with light emitting diodes that are lit when they have been depressed so that a receipt is obtained for the depressing, alternatively a row of light emitting diodes may be used as confirmation. The keys may be so called touch-keys or membrane keys.

The invention is not limited to the above embodiment but may be varied within the frame of the inventive thought within the scope of the appended claims.

## Claims

1. Safety control system for a tiller truck, comprising
- a safety control (9), mountable in a handle of the tiller truck so that it in normal use is turned towards the operator and arranged to initiate an anti squeeze operation at depression, and
- means for detecting the depression of the safety control (9) and based thereon to provide the anti squeeze operation,
**characterized in that** the means for detecting the depression of the safety control (9) and based thereon to provide the anti squeeze operation comprises
- a logic unit for programmed control, and
- switches or sensors (18) arranged to be activated by said safety control (9) and a second control (7,8),
wherein the logic unit is arranged to upon activation of one or several of said switches or sensors (18) from said safety control (9) activate a preprogrammed safety procedure so as to provide the anti squeeze operation, and
wherein the logic unit is arranged to monitor the functioning of said switches or sensors (18).

2. Safety control system according to claim 1, **characterized in that** the second control is the drive control (7,8) and that the switch or sensor or switches or sensors (18) that may be used by the safety control (9) corresponds in the drive control (7, 8) to a driving away from the operator and that the device is programmed to initiate driving away from the operator independent of the position of the drive control (7, 8) when the first control (9) is activated.

3. Safety control system according to claim 1 or 2, **characterized in that** the function, in use, of the switches or sensors (18), that is used by the safety control (9), is monitored by the logic unit in such a way that if the drive control (7,8) during its normal use of successive activation of said switches or sensors (18) passes the switch or sensor or switches or sensors (18) that are also used for the safety control (9), and said logic unit monitors that a sensor also used for the safety control (9) is not activated, continued driving is prevented, an error signal is delivered and/or drive limitations, such that the truck can only be driven with a reduced speed and/or that the truck cannot be driven towards the operator, are imposed.

4. Safety control system according to any of the preceding claims, **characterized in that** the safety control (9) can simultaneously influence two or more switches or sensors so located that the second control (7, 8) cannot influence both at the same time and that the occurrence of the two or several sensors activated at the same time initiates a driving away of the truck from the operator.

5. Safety control system according to any of the preceding claims, **characterized in that** the sensors (18) are arranged on a circuit card (20) together with the logic unit.

6. Safety control system according to any of the preceding claims, **characterized in that** the sensors (18) are contact free.

7. Safety control system according to any of the preceding claims, **characterized in that** the sensors are Hall sensors and that the safety control and the other control or controls include magnets (17, 22, 25, 56) moveable each on one side of the Hall-sensors.

## Patentansprüche

1. Sicherheitssteuersystem für ein deicheselgesteuertes Flurförderfahrzeug, umfassend:
- ein in einem Griffelement des Flurförderfahrzeuges montierbares Sicherheitssteuerelemennt (9), welches bei normaler Anwendung zum Anwender hin gerichtet ist und angepasst ist, um eine Antiquetschoperation bei Betätigung zu starten, und
- Mittel zur Erfassung einer Betätigung des Sicherheitssteuerelements (9) und basierend darauf, eine Antiquetschoperation zu ermöglichen,
**gekennzeichnet dadurch, dass** die Mittel zum Erfassen einer Betätigung des Sicherheitssteuerelements (9) und die darauf basierende Antiquetschoperation,:
- eine logische Einheit zur programmierten Steuerung, und
- Schalter oder Sensoren (18) umfassen, die angepasst sind um vom besagten Sicherheitsteuerelement (9) und einem zweiten Steuerelement (7,8) aktiviert zu werden,
wobei die logische Einheit angepasst ist, um bei Aktivierung von einen oder mehreren besagten Schaltern oder Sensoren (18) durch das besagte Sicherheitssteuerelement (9) eine vorprogrammierte Sicherheitsprozedur zu aktivieren, um so eine Antiquetschoperation zu ermöglichen, und wobei die logische Einheit angepasst ist, um die Funktion der besagten Schalter und Sensoren zu überwachen..

2. Sicherheitssteuersystem gemäß Anspruch 1, **gekennzeichnet dadurch, dass** das zweite Steuerelement das Fahrsteuerelement (7,8) ist und dass der Schalter oder Sensor oder die Schalter oder Sensoren (18), die für das Sicherheitssteuerelement (9) verwendet werden können, in dem Fahrelement (7,8) einem Wegfahren vom Anwender entsprechen und dass das Gerät programmiert ist, ein Wegfahren vom Anwender unabhängig von der Position des Fahrelements (7,8) in Gang zu setzen, wenn das erste Steuerelement (9) aktiviert ist.

3. Sicherheitssteuersystem gemäß Anspruch 1 oder 2, **gekennzeichnet dadurch, dass** die Funktion während der Benutzung der Schalter oder Sensoren (18), welche vom Sicherheitssteuerelement (9) benutzt werden, durch die logische Einheit in einer Art und Weise überwacht wird, dass wenn das Fahrelement (7,8) während seiner normalen Benutzung bei aufeinander folgender Aktivierung der besagten Schalter oder Sensoren (18) den Schalter oder Sensor oder die Schalter oder Sensoren, die für das Sicherheitssteuerelement ,(9) verwendet werden, überspringt und wobei die besagte logische Einheit überwacht, dass eine Sensor der auch für das Sicherheitssteuerelement (9) verwendet wird, nicht aktiviert ist, und das weiteres Fahren verhindert wird, samt das ein Fehlersignal generiert wird und/oder Fahreinschränkungen, so dass der Lastwagen nur mit gesenkter Geschwindigkeit gefahren werden kann und/oder, dass der Lastwagen nicht zum Anwender hin gefahren werden kann., erzwungen wird.

4. Sicherheitssteuersystem gemäß einen der vorangehenden Ansprüche, **gekennzeichnet dadurch, dass** das Sicherheitssteuerelement (9) zwei oder mehr Schalter oder Sensoren gleichzeitig beeinflussen kann, wobei die Sensoren so angeordnet sind, dass das zweite Steuerelement (7,8) nicht beide gleichzeitig beeinflussen kann und dass beim Eintreffen von zwei oder mehreren gleichzeitig aktivierten Sensoren ein Wegfahren des Fahrzeuges vom Anwender eingeleitet wird.

5. Sicherheitssteuersystem gemäß einen der vorangehenden Ansprüche, **gekennzeichnet dadurch, dass** die Sensoren (18) auf einer Platine (20) zusammen mit der logischen Einheit angeordnet sind.

6. Sicherheitssteuersystem gemäß einen der vorangehenden Ansprüche, **gekennzeichnet dadurch, dass** die Sensoren (18) kontaktfrei sind.

7. Sicherheitssteuersystem gemäß einen der vorangehenden Ansprüche, **gekennzeichnet dadurch, dass** die Sensoren Hallsensoren sind und dass das Sicherheitssteuerelement und das andere Steuerelement oder die anderen Steuerelemente Magnete beinhalten (17, 22, 25, 56), die jeweils auf einer Seite des Hallsensors bewegbar sind.

## Revendications

1. Système de contrôle de sécurité pour un chariot élévateur à timon, comprenant
- un contrôle de sécurité (9), apte á être monté dans une poignée du chariot élévateur à timon pour en usage normal étant tournée vers l'operateur et arrangée à initialiser, à l'appui, une opération anti pince, et
- des moyens pour détecter l'appui de la contrôle de sécurité (9) et basé sûr cela fournir l'opération anti pince,
**caractérisé en ce que** les moyens pour détection de l'appui de la contrôle de sécurité (9) et basé sûr cela fournir l'opération anti pince, comprennent
- une unité logique pour contrôle programmé
- commutateurs ou capteurs (18) arrangés à être activés par le dit contrôle de sécurité (9) et un deuxième contrôle (7, 8),
dans lequel l'unité logique est arrangée à activation d'un ou plusieurs des dites commutateurs ou capteurs (18) du dit contrôle de sécurité (9) d'activer une procédure de sécurité préprogrammé pour fournir l'opération anti pince, et dans lequel l'unité logique est arrangée à surveiller le fonctionnement des dits commutateurs ou capteurs (18).

2. Système de contrôle de sécurité selon la revendication 1, **caractérise en ce que** le deuxième contrôle est le contrôle de conduite (7, 8) et **en ce que** le commutateur ou le capteur ou les commutateurs ou les capteurs (18) qui peut (peuvent) être utilisé (s) par le contrôle de sécurité (9) correspond dans le contrôle de conduite (7, 8) à une conduite dans une autre direction par rapport à l'operateur et que le dispositif est programmé à initialiser une conduite dans une autre direction par rapport à l'operateur quel que soit la position du contrôle de conduite (7, 8) quand le premier contrôle (9) est activé.

3. Système de contrôle de sécurité selon une quelconque des revendications 1 ou 2, **caractérisé en ce que** le fonctionnement, en utilisation, des commutateurs ou les capteurs (18), qui sont utilisés par le contrôle de sécurité (9), sont surveillés par l'unité logique dans une façon que si le contrôle de conduite (7, 8) pendant son utilisation normal de activation successif des dits commutateurs ou capteurs (18) passe le commutateur ou le capteur ou les commutateurs ou les capteurs (18) qu'est (qui sont) aussi utilisé (s) pour le contrôle de sécurité (9), et la dite unité logique surveille si un capteur également utilisé pour le contrôle de sécurité (9) n'est pas activé, la conduite continue est évité, une signal d'erreur est délivré et/ou des limitations de conduite, de façon que le chariot élévateur peut seulement être conduit avec un vitesse réduit et/ou que le chariot élévateur ne peux pas être conduit vers l'operateur, est infligé.

4. Système de contrôle de sécurité selon une quelconque des revendications précédente, **caractérisé en ce que** le contrôle de sécurité (9) peut simultanément influencer deux ou plusieurs commutateurs ou capteurs localisés dans tel façon que la deuxième contrôle (7, 8) ne peut pas influencer les deux au même temps et le cas où les deux ou plusieurs capteurs sont activés au même temps initialise une conduite de chariot dans un autre sens par rapport à l'operateur.

5. Système de contrôle de sécurité selon une quelconque des revendications précédentes, **caractérisé en ce que** les capteurs (18) sont arrangés dans un circuit imprimé (plaque) (20) avec l'unité logique.

6. Système de contrôle de sécurité selon une quelconque des revendications précédentes **caractérisé en ce que** les capteurs (18) sont capteurs de proximité.

7. Système de contrôle de sécurité selon une quelconque des revendications précédentes, **caractérisé en ce que** les capteurs sont des capteurs à effet Hall et que le contrôle de sécurité et l'autre contrôle ou contrôles comprends des aimants (17, 22, 25, 56) chaqu'un mobile sûr une coté des capteurs à effet Hall.
